Europäisches Patentamt

(19) European Patent Office

Office européen des brevets

(11) Numéro de publication: **0 213 003**
**B1**

(12) **FASCICULE DE BREVET EUROPÉEN**

(45) Date de publication du fascicule du brevet:
**23.08.89**

(21) Numéro de dépôt: **86401447.7**

(22) Date de dépôt: **30.06.86**

(51) Int. Cl.⁴: **C 01 B 11/06**

(54) Procédé discontinu de préparation, en deux étapes de chloration, d'hypochlorite neutre de calcium hydraté.

(30) Priorité: **05.07.85 FR 8510332**

(43) Date de publication de la demande:
**04.03.87 Bulletin 87/10**

(45) Mention de la délivrance du brevet:
**23.08.89 Bulletin 89/34**

(84) Etats contractants désignés:
**AT BE CH DE FR GB IT LI LU NL SE**

(56) Documents cité:
**DE-C-404 768**
**FR-A-1 019 027**
**GB-A-565 089**
**US-A-2 320 635**
**US-A-4 367 209**

(73) Titulaire: **ATOCHEM, 4 & 8, Cours Michelet La Défense 10, F-92800 Puteaux (FR)**

(72) Inventeur: **Guerin, Jean, 88, rue Maurin des Maures, F-83600 Fréjus (FR)**

(74) Mandataire: **Rochet, Michel, ATOCHEM Département Propriété Industrielle La Défense 10 4 & 8 Cours Michelet, F-92800 Puteaux (FR)**

## Description

L'invention concerne un procédé discontinu de préparation, en deux étapes de chloration, par réaction de chlore gazeux sur une bouillie aqueuse d'hydroxyde de calcium, d'hypochlorite neutre de calcium hydraté sous forme d'une bouillie aqueuse particulièrement apte à permettre sa séparation par sédimentation et filtration.

L'hypochlorite neutre de calcium hydraté est largement utilisé comme ingrédient dans les poudres de blanchiment et comme agent de désinfection dans le traitement des eaux et notamment des eaux de piscines.

Lorsqu'on réalise la chloration d'une bouillie aqueuse d'hydroxyde de calcium on observe, à un stade donné de la chloration, une augmentation notable de la viscosité du milieu réactionnel due à la formation d'un mélange d'hypochlorite de calcium dibasique, de formule $Ca(ClO)_2, 2 Ca(OH)_2$, et de chlorure de calcium. L'hypochlorite de calcium dibasique se présente en tablettes de forme hexagonale dont les dimensions sont essentiellement fonction de la teneur en hydroxyde de calcium de la bouillie aqueuse initiale, de la température de réaction et du débit de chlore. Cette augmentation de viscosité du milieu réactionnel gêne la poursuite de la réaction de chloration, ce qui oblige à réduire le débit de chlore et, pour des conditions d'agitation données, diminue les échanges thermiques. En présence d'un excès local de chlore il en résulte la formation de chlorate de calcium, si la température s'élève au-dessus de 40°C. On est donc contraint d'utiliser une bouillie aqueuse dont la teneur en hydroxyde de calcium est suffisamment faible pour ne pas donner lieu aux inconvénients énoncés ci-dessus. On est également contraint d'utiliser une bouillie aqueuse dont la teneur en hydroxyde de calcium est suffisamment élevée pour obtenir une bouillie finale présentant une teneur en chlorure de calcium suffisante pour que l'effet de réducion, par le chlorure de calcium, de la solubilité dans la phase aqueuse, de l'hypochlorite neutre de calcium hydraté soit tel qu'il conduise à une productivité élevée exprimée en poids de ce dernier, obtenu sous forme précipitée, par unité de temps et par unité de volume de la bouillie initiale. La teneur en hydroxyde de calcium de la bouillie aqueuse initiale est généralement de 160 à 360 g/l.

Lorsqu'on poursuit l'introduction du chlore dans le milieu réactionnel, celui-ci dissout partiellement les cristaux d'hypochlorite dibasique de calcium en se combinant à l'hydroxyde de calcium et la viscosité du milieu réactionnel diminue. Il existe toutefois un risque de prise en masse du milieu réactionnel par précipitation d'hypochlorite de calcium de formule $3 Ca(ClO)_2, 2 Ca(OH)_2, 2H_2O$, qui cristallise sous forme d'aiguilles, lesquelles empêchent toute cristallisation correcte ultérieure de l'hypochlorite neutre de calcium hydraté. Dans des conditions d'agitation données, ce risque est d'autant plus grand que la teneur en hydroxyde de calcium de la bouillie initiale et la température du milieu réactionnel sont plus élevées.

Le brevet GB-565 089 décrit la préparation de bouillies d'hypochlorite de calcium neutre par addition d'un bouillie d'hypochlorite de calcium dibasique à une bouillie d'hypochlorite de calcium neutre en même temps qu'on injecte du chlore.

Un procédé discontinu de préparation d'hypochlorite neutre de calcium hydraté, en deux étapes de chloration, par réaction de chlore gazeux sur une bouillie aqueuse d'hydroxyde de calcium a été décrit par P. CENTOLA, R. DEL ROSSO et c. MAZZOCCHIA dans l'article ayant pour références: Technol. Chim. 1981, 1 (7), 68 - 73. Cependant ce procédé nécessite, entre les deux étapes, une opération de filtration de la bouillie obtenue en vue de séparer la phase liquide de la phase solide et une opération de remise en suspension dans l'eau de ladite phase solide, ce qui, par dissolution partielle de ladite phase solide, conduit à une diminution de la productivité d'hypochlorite neutre de calcium hydraté obtenu sous forme précipitée.

Le procédé selon l'invention ne présente pas les inconvénients énoncés ci-dessus. Il permet de préparer une bouillie aqueuse de cristaux d'hypochlorite neutre de calcium hydraté sous forme de tablettes carrées, de taille homogène, mesurant généralement de 30 à 40 µm de côté, ladite bouillie étant particulièrement apte à permettre la séparation desdits cristaux par sédimentation et filtration.

Selon le procédé de l'invention on fait réagir, en deux étapes de chloration, du chlore gazeux sur une bouillie aqueuse à teneur en hydroxyde de calcium de 160 à 360 g/l et maintient le milieu réactionnel sous agitation.

Selon le procédé de l'invention on réalise, dans la première étape, une opération de chloration, à température inférieure à 40°C et de préférence comprise entre 20 et 35°C, poursuivie jusqu'à ce que la teneur en hydroxyde calcium du milieu réactionnel ait été abaissée entre 45 et 80 g/l, on abaisse la température du milieu réactionnel entre 0 et 12°C en moins de 30 minutes et de préférence de 20 minutes, puis on réalise, dans la deuxième étape, une opération de chloration, à température comprise entre 5 et 22°C, en réglant le débit de chlore de manière que la durée de ladite opération de chloration, nécessaire pour abaisser la teneur du milieu réactionnel en hydroxyde de calcium au-dessous de 16 g/l et de préférence entre 5 et 10 g/l, soit comprise entre 10 et 25 minutes, et on abaisse ou maintient la température du milieu réactionnel au-dessous de 20°C et de préférence entre 12 et 15°C.

Selon le procédé de l'invention les températures maximales $\theta_1$ et $\theta_2$ atteintes au cours respectivement de la première et de la deuxième étapes sont telles que l'écart $\theta_1-\theta_2$ est au moins égal à 15°C.

La demanderesse a en effet trouvé qu'en réalisant la première étape de chloration à température suffisamment basse, en la faisant suivre d'une phase de refroidissement du milieu réactionnel suffisamment rapide et à température suffisamment basse, après que la teneur en hydroxyde de calcium du milieu réactionnel a été abaissée entre des limites déterminées, en réalisant la deuxième étape de chloration en réglant le débit de chlore à une valeur suffisamment élevée, tout en maintenant un écart suffisant $\theta_1-\theta_2$ entre les températures maximales $\theta_1$ et $\theta_2$ atteintes au cours respectivement de la première et de la deuxième étapes, on obtient, après abaissement ou maintien de la température au-dessous de 20°C, une bouillie aqueuse de cristaux d'hypochlorite neutre de calcium hydraté sous forme de tablettes carrées, de taille homogène, mesurant généralement de 30 à 40 µm de côté, ladite bouillie étant particulièrement apte à permettre la séparation desdits cristaux par sédimentation et filtration.

Le procédé de l'invention est applicable à de l'hydroxyde de calcium sous forme de particules de diamètre généralement compris entre 0 et 200 µm. Il est toutefois avantageux de mettre en oeuvre une bouillie aqueuse d'hydroxyde de calcium dont la tendance à la sédimentation soit faible et, pour ce faire, d'utiliser de l'hydroxyde de calcium formé de fines particules tel que, par exemple, 95 % en poids desdites particules aient un diamètre inférieur à 50 µm.

Selon une variante particulièrement avantageuse du procédé de l'invention on ajoute au milieu réactionnel, au cours de la première étape, après chloration de l'hydroxyde de calcium initialement présent par une quantité de chlore comprise entre 45 et 50 % de la quantité de chlore nécessaire à sa chloration total, un gâteau d'hypochlorite de calcium dibasique. Sous l'action de l'agitation ledit gâteau subit une désagrégation.

Selon ladite variante de procédé il est avantageux d'opérer de manière que la somme de la quantité d'hydroxyde de calcium de la bouillie initiale et de la quantité d'hydroxyde de calcium apporté par ledit gâteau soit telle qu'elle conduise à une bouillie finale dont les eaux mères présentent une teneur en chlorure de calcium suffisamment élevée pour donner lieu à une productivité élevée d'hypochlorite neutre de calcium hydraté obtenu sous forme précipitée. La quantité de gâteau d'hypochlorite de calcium dibasique est telle que la quantité d'hydroxyde de calcium apporté par ledit gâteau représente généralement 35 à 45 % et de préférence 38 à 40 % en poids de la somme hydroxyde de calcium initialement présent plus hydroxyde de calcium apporté par ledit gâteau.

Selon ladite variante de procédé le gâteau d'hypochlorite de calcium dibasique peut être obtenu notamment par traitement d'une bouillie aqueuse d'hydroxyde de calcium par les eaux mères résultant de la préparation d'une bouillie d'hypochlorite neutre de calcium hydraté et/ou les eaux de lavage de gâteau(x) d'hypochlorite neutre de calcium hydraté.

. Le procédé de l'invention est avantageusement mis en oeuvre dans un réacteur vertical muni d'un agitateur à ancre ou à cadre.

On donne ci-après, à titre illustratif et non limitatif, plusieurs exemples de réalisation du procédé de l'invention. L'exemple 1 est donné à titre comparatif.

Les exemples 2, 3 et 4 sont selon l'invention.

## Exemple 1

Dans un réacteur vertical de 3 litres de capacité muni d'un agitateur à ancre tournant à 300 tr/min on introduit une bouillie formée par 600 g d'hydroxyde de calcium dans 1,5 l d'eau distillée, puis introduit du chlore gazeux, à raison de 10 g/min pendant 42 min tandis que, par refroidissement extérieur du réacteur au moyen d'un bain-marie, la température du milieu réactionnel se maintient au plus égale à 30°C. Après arrêt de l'introduction du chlore on laisse refroidir le milieu réactionnel à 18°C alors qu'il contient 52 g/l d'hydroxyde de calcium.

On introduit à nouveau du chlore gazeux, à raison de 2 g/min pendant 44 min, tandis que, en poursuivant l'immersion du réacteur dans le bain-marie, la température du milieu réactionnel se maintient à 16°C. Après arrêt de l'introduction du chlore la bouillie obtenue ne contient plus que 5,6 g/l d'hydroxyde de calcium. Après abaissement de la température à 15°C la bouillie obtenue présente une viscosité élevée et une très mauvaise aptitude à la filtration.

## Exemple 2

L'appareillage est celui utilisé dans l'exemple 1.

On réalise la première étape de chloration comme dans l'exemple 1. Après arrêt de l'introduction du chlore on abaisse la température du milieu réactionnel à 10°C, en 15 min, par immersion du réacteur dans un mélange d'eau et de glace.

On introduit à nouveau du chlore gazeux, à raison de 8 g/min pendant 13 min, tandis que, en poursuivant l'immersion du réacteur dans le mélange d'eau et de glace, la température du milieu réactionnel s'élève à 22,5°C. Après arrêt de l'introduction du chlore la bouillie obtenue ne contient plus que 5 g/l d'hydroxyde de calcium. Elle comprend essentiellement des cristaux d'hypochlorite neutre de calcium hydraté sous forme de tablettes carrées, de taille homogène, de 30 à 35 µm de côté. Après abaissement de la température à 15°C la bouillie obtenue présente une faible viscosité et une très bonne aptitude à la filtration. Par filtration de 750 ml de ladite bouillie sur appareil Büchner on recueille 295 g d'un gâteau à 42,4 % en poids de chlore actif et 27 % en poids de chlore total.

**Exemple 3**

Dans un réacteur vertical de 5 m³ de capacité muni d'une double enveloppe à circulation de fluide de refroidissement et d'un agitateur à cadre tournant à 120 tr/min on introduit une bouillie formée de 900 kg d'hydroxyde de calcium dans 2500 l d'eau, puis introduit du chlore gazeux, à raison de 310 kg/h pendant 1 heure, tandis que la température du milieu réactionnel s'élève 39°C, puis à raison de 118 kg/h pendant 2,5 heures, tandis que la température du milieu réactionnel se maintient à 35°C. Après arrêt de l'introduction du chlore on abaisse la température du milieu réactionnel à 2°C, en 25 min, alors qu'il contient 47 g/l d'hydroxyde de calcium.

On introduit à nouveau du chlore gazeux, à raison de 300 kg/h pendant 15 min, puis, successivement, à raison de 470 kg/h pendant 10 min et à raison de 100 kg/h pendant 2 min, tandis que la température du milieu réactionnel s'élève à 20°C. La bouillie obtenue ne contient plus que 4,5 g/l d'hydroxyde de calcium. Elle comprend essentiellement des cristaux d'hypochlorite neutre de calcium hydraté sous forme de tablettes carrées, de taille homogène, de 30 à 35 μm de côté. Après abaissement de la température à 15°C la bouillie obtenue présente une faible viscosité et une très bonne aptitude à la filtration. Par filtration de ladite bouillie sur filtre-presse on recueille 528 kg d'un gâteau à 56,7 % en poids de chlore actif et 31,2 % en poids de chlore total.

**Exemple 4**

Dans un réacteur vertical de 5 litres de capacité muni d'un agitateur à ancre tournant à 300 tr/min on introduit une bouillie formée de 670 g d'hydroxyde de calcium dans 2,6 l d'eau distillée, puis introduit 320 g de chlore gazeux en 20 min, ce qui correspond à une quantité de chlore de 47,8 % de la quantité de chlore nécessaire à la chloration totale de l'hydroxyde de calcium, tandis que, par refroidissement du réacteur au moyen d'un bain-marie, la température du milieu réactionnel se maintient au plus égale à 37°C. On ajoute alors 1010 g d'un gâteau d'hypochlorite de calcium dibasique à 25 % en poids de chlore actif, 17,4 % en poids de chlore total et 29 % en poids d'hydroxyde de calcium. On introduit 192 g de chlore gazeux, en 15 min, tandis que, en poursuivant l'immersion du réacteur dans le bain-marie, la température se maintient au plus égale à 36°C. Après arrêt de l'introduction du chlore on abaisse la température du milieu réactionnel à 6,5°C, en 20 min, par immersion du réacteur dans un mélange d'eau et de glace.

On introduit 402 g de chlore gazeux, en 25 min, tandis que, en poursuivant l'immersion du réacteur dans le mélange d'eau et de glace, la température du milieu réactionnel s'élève à 21°C. La bouillie obtenue ne contient plus que 15 g/l d'hydroxyde de calcium. Elle comprend essentiellement des cristaux d'hypochlorite neutre de calcium hydraté sous forme de tablettes carrées, de taille homogène, de 30 à 35 μm de côté. Après abaissement de la température à 15°C la bouillie obtenue présente une faible viscosité et une très bonne aptitude à la filtration. Par filtration de ladite bouillie sur appareil Büchner on recueille 305 g d'un gâteau à 45,2 % en poids de chlore actif et 27,5 % en poids de chlore total.

**Revendications**

1. Procédé discontinu de préparation d'hypochlorite neutre de calcium hydraté, sous forme d'une bouillie aqueuse, selon lequel on fait réagir, en deux étapes de chloration, du chlore gazeux sur une bouillie aqueuse à teneur en hydroxyde de calcium de 160 à 360 g/l et maintient le milieu réactionnel sous agitation, caractérisé par le fait que l'on réalise, dans la première étape, une opération de chloration, à température inférieure à 40°C et de préférence comprise entre 20 et 35°C, poursuivie jusqu'à ce que la teneur en hydroxyde de calcium du milieu réactionnel ait été abaissée entre 45 et 80 g/l, on abaisse la température du milieu réactionnel entre 0 et 12°C en moins de 30 minutes et de préférence de 20 minutes, puis on réalise, dans la deuxième étape, une opération de chloration, à température comprise entre 5 et 22,5°C, en réglant le débit de chlore de manière que la durée de ladite opération de chloration, nécessaire pour abaisser la teneur du milieu réactionnel en hydroxyde de calcium au-dessous de 16 g/l et de préférence entre 5 et 10 g/l, soit comprise entre 10 et 25 minutes, et on abaisse ou maintient la température du milieu réactionnel au-dessous de 20°C et de préférence entre 12 et 15°C, les températures maximales $\theta_1$ et $\theta_2$ atteintes au cours respectivement de la première et de la deuxième étapes étant telles que l'écart $\theta_1$-$\theta_2$ est au moins égal à 15°C, et qu'il est appliqué à de l'hydroxyde de calcium sous forme de particules de diamètre compris entre 0 et 200 μm.

2. Procédé selon la revendication 1, caractérisé par le fait que 95 % en poids desdites particules ont un diamètre inférieur à 50 μm.

3. Procédé selon l'une quelconque des revendications 1 à 2, caractérisé par le fait que l'on ajoute au milieu réactionnel, au cours de la première étape, après chloration de l'hydroxyde de calcium présent initialement par une quantité de chlore comprise entre 45 et 50 % de la quantité de chlore nécessaire à sa chloration totale, un gâteau d'hypochlorite de calcium dibasique.

4. Procédé selon la revendication 3, caractérisé par le fait que la quantité de gâteau d'hypochlorite de calcium dibasique est telle que la quantité d'hydroxyde de calcium apporté par ledit gâteau représente 35 à 45 % et de préférence 38 à 40 % en poids de la somme hydroxyde de calcium initialement présent plus hydroxyde de calcium apporté par ledit gâteau.

5. Procédé selon l'une quelconque des revendications 3 et 4, caractérisé par le fait que le gâteau d'hypochlorite de calcium dibasique est obtenu par traitement d'une bouillie aqueuse d'hydroxyde de calcium par les eaux mères résultant de la préparation d'une bouillie d'hypochlorite neutre de calcium hydraté.

6. Procédé selon l'une quelconque des revendication 3 à 5, caractérisé par le fait que le gâteau d'hypochlorite de calcium dibasique est obtenu par traitement d'une bouillie aqueuse d'hydroxyde de calcium par les eaux de lavage de gâteau(x) d'hypochlorite neutre de calcium hydraté.

**Patentansprüche**

1. Diskontinuierliches Verfahren zur Herstellung von neutralem hydratiertem Calciumhypochlorit in Form einer wäßrigen Aufschlämmung, bei dem man in zwei Chlorierungsschritten gasförmiges Chlor mit einer wäßrigen Aufschlämmung mit einem Calciumhydroxidgehalt von 160 bis 360 g/l reagieren läßt und das Reaktionsmedium unter Rühren hält, dadurch gekennzeichnet, daß man im ersten Schritt eine Chlorierung bei einer Temperatur unterhalb von 40°C und vorzugsweise zwischen 20 und 35°C durchführt, bis der Calciumhydroxidgehalt im Reaktionsmedium auf 45 bis 80 g/l abgesenkt ist, die Temperatur in weniger als 30 Minuten und vorzugsweise weniger als 20 Minuten auf einen Wert zwischen 0 und 12°C absenkt, dann im zweiten Schritt eine Chlorierung bei einer Temperatur zwischen 5 und 22,5°C durchführt, wobei der Chloreintrag so geregelt wird, daß die Dauer dieser Chlorierung, die notwendig ist, um den Calciumhydroxidgehalt des Reaktionsmediums unterhalb 16 g/l und vorzugsweise zwischen 5 und 10 g/l abzusenken, zwischen 10 und 25 Minuten liegt, und man die Temperatur des Reaktionsmediums unterhalb 20°C und vorzugsweise zwischen 12 und 15°C absenkt, wobei die jeweils maximalen im Verlauf des ersten und des zweiten Schritts erreichten Temperaturen $\theta_1$ und $\theta_2$ so sind, daß die Differenz $\theta_1 - \theta_2$ wenigstens gleich 15°C ist, und daß es auf Calciumhydroxid in Form von Teilchen mit einem Durchmesser im Bereich von 0 und 200 µm angewandt wird.

2. Verfahren nach Anspruch 1, dadurch gekennzeichnet, daß 95 Gew.-% der Teilchen einen Durchmesser von weniger als 50 µm haben.

3. Verfahren nach einem der Ansprüche 1 und 2, dadurch gekennzeichnet, daß man dem Reaktionsmedium im Verlauf des ersten Schritts nach der Chlorierung des anfänglichen vorhandenen Calciumhydroxids mit einer Chlormenge zwischen 45 und 50 % der Chlormenge, die für die gesamte Chlorierung erforderlich ist, einen Kuchen aus dibasischem Calciumhypochlorit zusetzt.

4. Verfahren nach Anspruch 3, dadurch gekennzeichnet, daß die Menge an dibasischem Calciumhypochloritkuchen so ist, daß die von diesem Kuchen eingetragene Menge an Calciumhydroxid 35 bis 45 % und vorzugsweise 38 bis 40 % nach dem Gewicht der Summe von anfänglichen vorhandenem Calciumhydroxid plus durch diesen Kuchen eingetragenem Calciumhydroxid darstellt.

5. Verfahren nach einem der Ansprüche 3 und 4, dadurch gekennzeichnet, daß der Kuchen von dibasischem Calciumhypochlorit durch Behandlung einer wäßrigen Aufschlämmung von Calciumhydroxid aus den Mutterlaugen erhalten wird, die aus der Herstellung einer neutralen hydratisierten Calciumhypochlorit Herstellung resultieren.

6. Verfahren nach einem der Ansprüche 3 bis 5, dadurch gekennzeichnet, daß der Kuchen aus dibasischem Calciumhypochlorit durch Behandlung einer wäßrigen Calciumhydroxidaufschlämmung aus den Waschwässern des/der Kuchen/s aus neutralem hydratisiertem Calciumhypochlorit erhalten wird.

**Claims**

1. Discontinuous process for the preparation of neutral calcium hypochlorite hydrate, in the form of an aqueous slurry, according to which gaseous chlorine is reacted, in two chlorination stages, with an aqueous slurry with a calcium hydroxide content of 160 to 360 g/l and the reaction medium is kept stirred, characterized by the fact that, in the first step, a chlorination operation is effected at a temperature below 40°C and preferably of between 20 and 35°C, and continued until the calcium hydroxide content of the reaction medium has been lowered to between 45 and 80 g/l, the temperature of the reaction medium is lowered to between 0 and 12°C in less than 30 minutes and preferably less than 20 minutes and, in the second step, a chlorination operation is then effected at a temperature of between 5 and 22.5°C, the rate of flow of chlorine being regulated in such a way that the duration of the said chlorination operation, necessary to lower the calcium hydroxide content of the reaction medium to below 16 g/l and preferably between 5 and 10 g/l, is between 10 and 25 minutes, and the temperature of the reaction medium is lowered to or maintained at below 20°C and preferably between 12 and 15°C, the maximum temperatures $\theta_1$ and $\theta_2$ reached in the course of, respectively, the first and the second steps being such that the difference $\theta_1 - \theta_2$ is at least equal to 15°C, and that it is applied to calcium hydroxide in the form of particles with a diameter of between 0 and 200 µm.

2. Process according to claim 1, characterized by the fact that 95 % by weight of the said particles have a diameter of less than 50 μm.

3. Process according to either of claims 1 to 2, characterized by the fact that, in the course of the first step, after chlorination of the calcium hydroxide initially present by an amount of chlorine of between 45 and 50 % of the amount of chlorine necessary for its total chlorination, a cake of dibasic calcium hypochlorite is added to the reaction medium.

4. Process according to claim 3, characterized by the fact that the amount of dibasic calcium hypochlorite cake is such that the amount of calcium hydroxide introduced by the said cake represents 35 to 45 % and preferably 38 to 40 % by weight of the sum of calcium hydroxide initially present plus calcium hydroxide introduced by the said cake.

5. Process according to either of claims 3 and 4, characterized by the fact that the dibasic calcium hypochlorite cake is obtained by treatment of an aqueous slurry of calcium hydroxide with the mother liquors resulting from the preparation of a slurry of neutral calcium hypochlorite hydrate.

6. Process according to any one of claims 3 to 5, characterized by the fact that the dibasic calcium hypochlorite cake is obtained by treatment of an aqueous slurry of calcium hydroxide with the waters from washing neutral calcium hypochlorite hydrate cake (s.)